# EUROPEAN PATENT APPLICATION

(11) **EP 2 937 406 A1**
(43) Date of publication of application: **28.10.2015**
(21) Application number: 13866140.0
(22) Date of filing: 19.12.2013
(51) Int. Cl.: C10L 5/04, C10B 53/00, C10B 31/02

(54) **METHOD FOR MANUFACTURING BRIQUETTE**

(30) Priority: 21.12.2012 KR 20120151312
(71) Applicant: Posco, Gyeongsangbuk-do 790-300 (KR)
(72) Inventor: HEO, Nam-Hwan, Pohang-si Gyeongsangbuk-do 790-300 (KR); CHOI, Jae-Hoon, Pohang-si Gyeongsangbuk-do 790-300 (KR); KIM, Jae Dong, Pohang-si Gyeongsangbuk-do 790-300 (KR)
(74) Representative: Zech, Stefan Markus
(86) International application number: PCT/KR2013/011895
(87) International publication number: WO 2014/098502

(57) **Abstract**

A method for manufacturing coal briquettes which are charged into a dome part of a melter-gasifier to be rapidly heated in a manufacturing apparatus of molten iron including the melter-gasifier in which reduced iron is charged, and a reducing furnace connected to the melter-gasifier and providing the reduced iron is provided. The method for manufacturing coal briquettes includes: i) providing fine coal; ii) calcinating a carbon source; iii) providing a mixture obtained by mixing the fine coal and the calcined carbon source; and iv) providing coal briquettes by molding the mixture. In the providing of the mixture, the amount of carbon source may be more than 0 and 30wt% or less of the mixture.

## Description

### [Technical Field]

The present invention relates to a method for manufacturing coal briquettes. More particularly, the present invention relates to a method for manufacturing coal briquettes having excellent quality in a hot state.

### (b) Description of the Related Art

In a smelting reduction iron-making method, a reducing furnace reducing iron ores and a melter-gasifier melting reduced iron ores are used. In the case of melting iron ores in the melter-gasifier, as a heat source to melt iron ores, coal briquettes are charged into the melter-gasifier. Here, reduced iron are melted in the melter-gasifier, transformed to molten iron and slag, and then discharged outside. The coal briquettes charged into the melter-gasifier form a coal-packed bed. After oxygen is injected through a tuyere installed at the melter-gasifier, the coal-packed bed is combusted to generate combustion gas. The combustion gas is transformed into a hot reducing gas while rising through the coal-packed bed. The hot reducing gas is discharged outside the melter-gasifier to be provided to the reducing furnace as the reducing gas.

The coal briquettes are charged into the melter-gasifier as a heat source. The coal charged into the melter-gasifier is transformed into a char by hot gas in a dome portion to be used as a heat source for a melting reduced iron while falling to the lower portion of the melter-gasifier. Accordingly, in order to melt the reduced iron well, while the coal briquettes are not differentiated by hot gas in the dome part of the melter-gasifier, the coal briquettes do not disappear while falling to the lower portion of the melter-gasifier and thus it is required to continuously keep the shape thereof.

### [DISCLOSURE]

### [Technical Problem]

A method for manufacturing coal briquettes having excellent quality in a hot state is provided.

### [Technical Solution]

In a method for manufacturing coal briquettes according to an exemplary embodiment of the present invention, coal briquettes are charged into a dome part of the melter-gasifier to be rapidly heated in an apparatus for manufacturing molten iron including a melter-gasifier into which reduced irons are charged, and a reducing furnace connected to the melter-gasifier and providing the reduced iron. A method for manufacturing coal briquettes according to an exemplary embodiment of the present invention includes i) providing fine coal; ii) calcinating a carbon source; iii) providing a mixture obtained by mixing the fine coal and the calcined carbon source; and iv) providing coal briquettes by molding the mixture. In the providing of the mixture, the amount of carbon source is more than 0wt% and 50wt% or less of the mixture.

In the calcinating of the carbon source, the carbon source may be one or more materials selected from a group consisting of petroleum coke, anthracite coal, and brown coal. In the calcinating of the carbon source, the carbon source may be one or more materials selected from a group consisting of sub-bituminous coal, bituminous coal, and semi-anthracite coal.

In the providing of the mixture, the amount of carbon source may be 5wt% to 30wt%. The method may further include selecting a grain size of the carbon source, and in the providing of the mixture, the grain size of the carbon source may be larger than 0 and is 3mm or less.

In the calcinating of the carbon source, a calcinating temperature of the carbon source may be 700°C to 1100°C. The calcinating temperature of the carbon source is 800 °C to 1000 °C .

In the calcinating of the carbon source, when the carbon source is petroleum coke, the amount of petroleum coke in the mixture may be 10wt% to 50wt%. In the calcinating of the carbon source, when the carbon source is anthracite coal, the amount of anthracite coal in the mixture may be 5wt% to 30wt%. In the calcinating of the carbon source, when the carbon source is brown coal, the amount of brown coal in the mixture may be 5wt% to 30wt%.

### [Advantageous Effects]

The coal briquettes may be manufactured with a low price while improving hot strength of the coal briquettes by adding a relatively low-priced carbon source such as petroleum coke, anthracite coal, and brown coal to the coal briquettes. As a result, grain size and strength of a char may be increased while the coal briquettes charged into the melter-gasifier are not differentiated at a high temperature, thereby efficiently performing an operation.

### [Description of the Drawings]

FIG. 1 is a schematic flowchart of a method for manufacturing coal briquettes according to an exemplary embodiment of the present invention.
FIG. 2 is a schematic diagram of a manufacturing apparatus of molten iron using the coal briquettes manufactured in FIG. 1.
FIG. 3 is a schematic diagram of another manufacturing apparatus of molten iron using the coal briquettes manufactured in FIG. 1.

### [Mode for Invention]

Terms used herein such as first, second, and third are used to illustrate various portions, components, regions, layers, and/or sections, but not limit them. These terms are used to discriminate the portions, components, regions, layers, or sections from the other portions, components, regions, layers or sections. Therefore, the first portion, component, region, layer, or section as described below may be the second portion, component, region, layer, or section within the scope of the present invention.

It is to be understood that the terminology used herein is only for the purpose of describing particular embodiments and is not intended to be limiting. It must be noted that, as used in the specification and the appended claims, the singular forms include plural references unless the context clearly dictates otherwise. It will be further understood that the terms "comprises" and/or "comprising," when used in this specification, specify the presence of stated properties, regions, integers, steps, operations, elements, and/or components, but do not preclude the presence or addition of one or more other properties, regions, integers, steps, operations, elements, and/or components thereof.

Unless it is not mentioned, all terms including technical terms and scientific terms used herein have the same meaning as the meaning generally understood by a person with ordinary skill in the art to which the present invention belongs. The terminologies that are defined previously are further understood to have the meaning that coincides with relating technical documents and the contents that are disclosed currently, but are not to be interpreted as the ideal or overly official meaning unless so defined.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

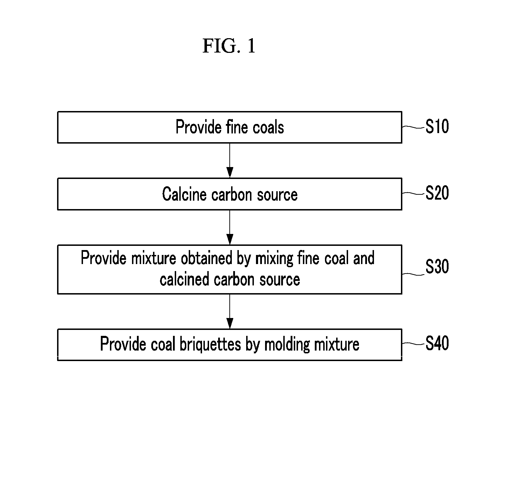

FIG. 1 schematically illustrates a flowchart of a method for manufacturing coal briquettes according to an exemplary embodiment of the present invention. The flowchart of the method for manufacturing coal briquettes of FIG. 1 is to just exemplify the present invention, and the present invention is not limited thereto. Accordingly, the method for manufacturing coal briquettes may be variously modified.

As illustrated in FIG. 1, the method for manufacturing coal briquettes includes i) providing fine coal, ii) providing a carbon source obtained by calcined petroleum coke, iii) providing a mixture by mixing the fine coal and the carbon source, and iv) providing coal briquettes by molding the mixture. In addition, if necessary, the method for manufacturing coal briquettes may further include other processes.

First, in step S10, the fine coal is provided. The fine coal is used as raw coal.

Next, in step S20, the carbon source is calcined. As the carbon source, petroleum cokes, anthracite coal, or brown coal may be used. The petroleum cokes are discharged as by-products in a variety of petroleum refining processes. The petroleum coke includes coal ash of less than 1wt% and a volatile matter of 10wt% to 12wt%. That is, since amounts of the coal ash and the volatile matter included in the petroleum coke are small, the petroleum coke has a calorific value which is higher than that of the raw coal by 10% or more. Accordingly, in the case of using the petroleum coke, the coal ash of the coal briquettes is reduced, and an amount of fixed carbon included in the coal briquettes may be increased.

Generally, when the amount of coal ash included in coal is large, contents of relatively combustible carbon and hydrogen decrease, and thus the calorific value of coal decreases as well. If the amount of coal ash of the coal charged into the melter-gasifier is large, most of the coal ash remains in the char, and as result, the calorific value of the char is reduced and a calorific value for dissolving the coal ash included in the char and discharging to slag is additionally required. Since the usage amount of coal required for producing molten iron increased due to the additional calorific value, it is not preferable from the viewpoint of an increase in manufacturing cost. Accordingly, in order to reduce the amount of coal ash included in the coal briquettes, the petroleum coke having the low coal ash content is processed to be added. Char yield that coal briquettes manufactured by using the method are transformed to the char may be increased.

The petroleum coke is generally manufactured at a low temperature of 500°C or less. Accordingly, if petroleum coke having a low heat-treatment history is heat treated at a higher temperature than the low heat-treatment history, the petroleum coke is thermally deformed while being contracted or thermally swollen. Therefore, in the case of manufacturing coal briquettes by adding petroleum coke, the petroleum coke is deformed in the melter-gasifier at 1000°C or more and thus the coal briquettes are differentiated to char having a very small size.

Therefore, in step S20, green petroleum coke (G-PC) having a thermal hysteresis at 500°C or less is calcined at a high temperature. That is, the green petroleum coke is calcined at a high temperature of 700°C to 1100°C. When a calcinating temperature of the green petroleum coke is very low, a volatile matter discharging reaction of the green petroleum coke and dehydrogenation in which hydrogen attached to a carbon skeleton is discharged as a gas do not occur. Meanwhile, when the calcinating temperature of the green petroleum coke is very high, a lot of energy is consumed due to high-temperature treatment. Accordingly, the calcinating temperature of the green petroleum coke is controlled in the aforementioned range, and thus the volatile matter discharging reaction of the green petroleum coke and the dehydrogenation are caused while reducing a heat-treatment time. Preferably, the green petroleum coke is calcined at 800°C to 1000°C.

When the petroleum coke is calcined, inert gas, air, or the like may be used as atmospheric gas. More preferably, a combustible component of petroleum coke is combusted by supplying air. The combustible component of petroleum coke is combusted and thus the temperature of the petroleum coke increases, and as a result, it is not required to supply extra energy requiring for calcinating. In the case of measurement by an industrial analysis method of coal, the calcinating degree of the petroleum coke is sufficient if the volatile matter is approximately less than 2%. Further, a grain size of calcined petroleum coke is preferably more than 0 and 3mm or less. If the grain size of the petroleum coke is very large, petroleum coke is not uniformly mixed with fine coal and thus the quality of coal briquettes deteriorates. Accordingly, the grain size of petroleum coke is controlled within the aforementioned range.

Meanwhile, anthracite coal or brown coal may be used as a carbon source instead of the petroleum coke. The anthracite coal has the highest degree of carbonization among different coals, and the volatile matter content thereof is smallest. Accordingly, a discharging amount of the volatile matter is relatively small while the anthracite coal is calcined, and as a result, a recovery amount of a carbon source is large after calcinating the anthracite coal. The quality in a hot state of coal briquettes may be improved by using brown coal having the lowest degree of carbonization among different coals. In addition, sub-bituminous coal, bituminous coal, or semi-anthracite coal may be used as a carbon source.

Next, in step S30, a mixture in which fine coal and a carbon source are mixed is provided. That is, the mixture in which the carbon source obtained by calcinating petroleum coke, anthracite coal, or brown coal and the fine coal are mixed is provided as a raw material. In this case, the amount of carbon source in the mixture is 50wt% or less of the mixture. If a lot of the carbon source is mixed with the mixture, manufacturing cost of the coal briquettes increases. Accordingly, the amount of carbon source is controlled in the aforementioned range. More preferably, the amount of carbon source may be 53wt% or less of the mixture.

Finally, in step S40, the mixture is molded to manufacture coal briquettes. For example, after a binder such as molasses is mixed and added to the mixture, the mixture is molded to manufacture coal briquettes. That is, although not illustrated in FIG. 1, the mixture is compacted between a pair of rolls rotating in opposite directions to each other to manufacture coal briquettes in a pocket or strip shape. As a result, coal briquettes having excellent hot strength and cold strength may be manufactured.

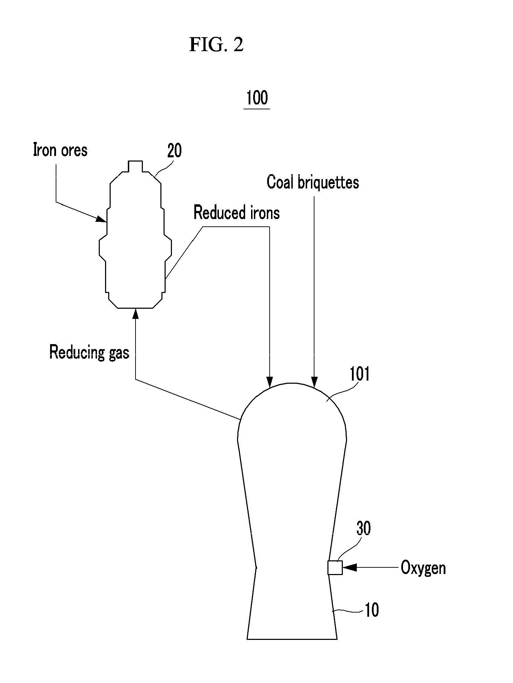

FIG. 2 schematically illustrates an apparatus for manufacturing molten iron 100 using the coal briquettes manufactured in FIG. 1. A structure of the apparatus for manufacturing molten iron 100 in FIG. 2 is just to exemplify the present invention, and the present invention is not limited thereto. Accordingly, the apparatus for manufacturing molten iron 100 in FIG. 2 may be modified in various shapes.

The apparatus for manufacturing molten iron 100 in FIG. 2 includes a melter-gasifier 10 and a reducing furnace 20. In addition, if necessary, other devices may be included. Iron ore is charged into and reduced in the reducing furnace 20. The iron ore charged into the reducing furnace 20 is dried in advance and then prepared as reduced iron while passing through the reducing furnace 20. The reducing furnace 20, as a coal-packed bed type of reducing furnace, receives the reducing gas from the melter-gasifier 10 to form a coal-packed bed in the reducing furnace 20.

Since the coal briquettes manufactured by the manufacturing method of FIG. 1 are charged into the melter-gasifier 10, a coal-packed bed is formed in the melter-gasifier 10. A dome portion 101 is formed in the melter-gasifier 10. That is, a wide space is formed as compared with another part of the melter-gasifier 10, and hot reducing gas exists therein. Accordingly, the coal briquettes charged into the dome portion 101 may be easily differentiated by the hot reducing gas. That is, since the coal briquettes are charged into the top of the melter-gasifier maintained at 1000°C, the coal briquettes are subjected to drastic thermal impact. Accordingly, the coal briquettes may be differentiated while moving to the lower portion of the melter-gasifier.

In order to overcome the differentiation condition, a process of improving the strength of coal briquettes by using bitumen as a binder of the coal briquettes is known. However, in the case of using bitumen as the binder, there are problems in that manufacturing cost may be largely increased and the coal briquettes are differentiated well in the melter-gasifier at 1000 °C . Accordingly, the coal briquettes need not be differentiated well in the melter-gasifier by increasing the hot strength of the coal briquettes.

Thus, since the coal briquettes manufactured by using the method of FIG. 1 have a high hot strength, the coal briquettes are not differentiated at the dome portion of the melter-gasifier 10 and fall to the bottom of the melter-gasifier 10. Char generated by a pyrolysis reaction of the coal briquettes moves to the bottom of the melter-gasifier 10 to exothermic-react with oxygen provided through the tuyere 101. As a result, the coal briquettes may be used as a heat source which keeps the melter-gasifier 10 at a high temperature. Meanwhile, since the char provides permeability, a large amount of gas generated below the melter-gasifier 10 and reduced iron provided from the reducing furnace 20 may more easily and uniformly pass through the coal-packed bed in the melter-gasifier 10.

In addition to the aforementioned coal briquettes, if necessary, lump carbon ash or coke may be charged into the melter-gasifier 10. A tuyere 80 is installed at an outer wall of the melter-gasifier 60 to inject oxygen. Oxygen is injected to the coal-packed bed to form a combustion zone. The coal briquettes are combusted in the combustion zone to generate reducing gas.

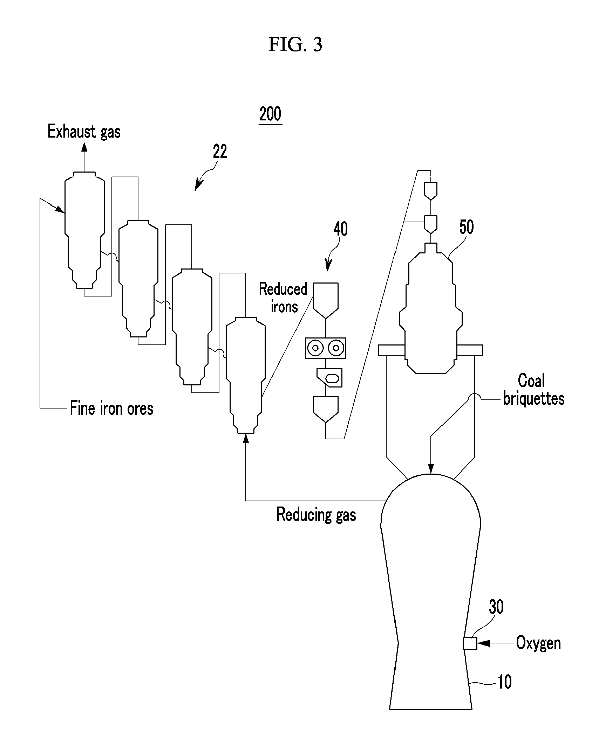

FIG. 3 schematically illustrates an apparatus for manufacturing molten iron 200 using the coal briquettes manufactured in FIG. 1. A structure of the apparatus for manufacturing molten iron 200 in FIG. 3 is just to exemplify the present invention, and the present invention is not limited thereto. Accordingly, the apparatus for manufacturing molten iron 200 in FIG. 3 may be modified in various forms. Since the structure of the apparatus for manufacturing molten iron 200 in FIG. 3 is similar to the structure of the apparatus for manufacturing molten iron 100 in FIG. 2, like reference numerals are used in like parts, and the detailed description is omitted.

As illustrated in FIG. 3, the apparatus for manufacturing molten iron 200 includes a melter-gasifier 10, a reducing furnace 22, a device for manufacturing compacted irons 40, and a compacted irons storage bin 50. Here, the compacted irons storage bin 50 may be omitted.

The manufactured coal briquettes are charged into the melting gasifier 10. Here, the coal briquettes generate reducing gas in the melter-gasifier 10 and the generated reducing gas is provided to a fluidized-bed reducing furnace. Fine iron ore is provided to a plurality of fluidized-bed reducing furnaces 22, and is manufactured to reduced iron while being fluidized by reducing gas provided to the reducing furnaces 22 from the melter-gasifier 10. The reduced iron is compacted by the device for manufacturing compacted irons 40 and stored in the compacted irons storage bin 50. The compacted reduced iron is provided from the compacted irons storage bin 50 to the melter-gasifier 10 to be melted in the melter-gasifier 10. Since the coal briquettes are provided to the melter-gasifier 10 to be transformed to char having permeability, a large amount of gas generated below the melter-gasifier 10 and the compacted reduced iron more easily and uniformly pass through the coal-packed bed in the melter-gasifier 10 to manufacture molten iron with good quality.

Hereinafter, the present invention will be described in more detail through experimental examples. experimental examples are just to exemplify the present invention, and the present invention is not limited thereto.

### Experimental Example

Coal briquettes for adding and charging petroleum coke, anthracite coal, and brown coal into the melter-gasifier were manufactured. Molasses was used as a binder during manufacture of the coal briquettes. In order to evaluate the quality of the manufactured coal briquettes, 1000g of coal briquettes were charged into a reaction tube maintained at 1000°C, heat-treated at 10 rotations per minute, that is, a rotational speed of 10 rpm for 60 minutes to obtain char, and the obtained char was distributed. A hot strength index of coal briquettes was evaluated by representing a percentage of a weight of char with 10 mm or more as a sieve with respect to a weight of the entire char.

### Petroleum coke adding experiment

Molasses of 8.5 equivalents was mixed with fine coal with respect to a total amount of 100 equivalents of calcined petroleum coke to manufacture coal briquettes. Main properties of petroleum coke are listed in the following Table 1.

**(Table 1)**

| Technical analysis (%) | | | Calorific value (Kcal/kg) |
|---|---|---|---|
| Coal ash | Volatile matter | Fixed carbon | |
| 0.5 | 10.9 | 88.6 | 8500 |

### Experimental Example 1

Non-calcined petroleum coke having properties of Table 1 or 10% of the petroleum coke calcined at 800°C was added to coal A including 36% of a volatile matter to manufacture coal briquettes for charging into the melter-gasifier. Properties and quality in a hot state of coal briquettes are listed in the following Table 2. The calcined petroleum coke is represented as calcined petroleum coke (C-PC).

Since the calcined petroleum coke exists in a state where the volatile matter is removed, in the case of adding the calcined petroleum coke, the amount of fixed carbon added in the coal briquettes increased. Meanwhile, the hot strength index of the coal briquettes was largely improved to 54.3% and to be much larger than the hot strength index of 12.3% of coal briquettes of Comparative Example 1 and the hot strength index of 8.7 % of coal briquettes of Comparative Example 2, and thus a large grain size of char may be generated. Accordingly, when the calcined petroleum coke is added to the coal briquettes, during hot heat treatment, the petroleum coke is not physically changed, and thus the coal briquettes may generate a large grain size of char.

### Experimental Example 2

An amount of calcined petroleum coke mixed in the coal briquettes was controlled to 30wt%. The rest processes for manufacturing coal briquettes are the same as those in the aforementioned Experimental Example 1.

As listed in Table 2, since an adding amount of calcined petroleum coke increased, the amount of fixed carbon increased while the amount of coal ash included in the coal briquettes was further reduced. Further, char yield largely increased, and the hot strength index which was differentiation resistance capacity at a high temperature of the coal briquettes largely increased.

### Comparative Example 1

A molasses binder was mixed with coal A to manufacture coal briquettes. In this case, since the volatile matter content of the coal briquettes was high at approximately 40%, the amount of fixed carbon of the coal briquettes was very low as 50.1%. Further, yield of char obtained by heat-treating the coal briquettes at 1000°C for 60 minutes was low at 62.4%.

### Comparative Example 2

In order to reduce coal ash of coal briquettes and improve char yield, 10 wt% of fine green petroleum coke (G-PC) was added to coal A to manufacture coal briquettes. In this case, the coal ash of the coal briquettes was slightly reduced and the amount of fixed carbon increased. Further, char yield increased to 64.5 % and coal ash of char was rather reduced. However, in spite of improved physical properties of the coal briquettes, the hot strength index of the coal briquettes was reduced to 8.7 %

The reason is that petroleum coke without coking force added for reducing the coal ash did not contribute to binding of the coal briquettes according to a thermal change in a heating process at a high temperature and was differentiated to small particles.

### Comparative Example 3

50wt% of coal A and 50wt% of calcined petroleum coke were mixed with each other to manufacture coal briquettes. Since the rest of experimental processes are the same as those of the aforementioned Experimental Example 2, the detailed description is omitted.

In this case, the amount of coal ash of the coal briquettes was reduced, the amount of fixed carbon increased, and char yield increased, but the hot strength index of the coal briquettes was rather reduced. When the coal briquettes are rapidly heated, particles of a powder are fused to each other to form lump char. However, due to a characteristic of coal A which is a raw coal having low coking force, when an adding amount of calcined petroleum coke which is a solid powder is high at 50% or more, a large grain size of char may not be obtained. That is, since the petroleum coke has a solid powder shape without coking force, there is a limit to the adding amount during manufacture of the coal briquettes.

**(Table 2)**

| Experimental Example | Raw material mixing ratio (%) | | | Technical analysis of coal briquettes (%) | | Technical analysis of char (%) | | Char yield (%) | Hot strength index (+10 mm, %) |
|---|---|---|---|---|---|---|---|---|---|
| | Coal A | G-PC | C-PC | Coal ash | Fixed carbon | Coal ash | Fixed carbon | | |
| Experimental Example 1 | 90 | | 10 | 10.1 | 53.7 | 15.0 | 82.9 | 65.4 | 54.3 |
| Experimental Example 2 | 70 | | 30 | 9.6 | 57.2 | | | 69.5 | 59.5 |
| Comparative Example 1 | 100 | | | 10.3 | 50.1 | 16.3 | 81.7 | 62.4 | 12.3 |
| Comparative Example 2 | 90 | 10 | | 10.1 | 52.5 | 15.0 | 82.7 | 64.5 | 8.7 |
| Comparative Example 3 | 50 | | 50 | 8.9 | 63.5 | | | 73.5 | 21.5 |

### Calcined anthracite coal adding experiment

Coal briquettes were manufactured by using anthracite coal instead of petroleum coke. The anthracite coal has the highest degree of carbonization among different kinds of coal. The coal briquettes were manufactured by mixing calcined anthracite coal and non-anthracite coal with fine coal.

### Experimental Example 3

Coal briquettes were manufactured by mixing 5wt% of anthracite coal calcined at 800 °C and 95wt% of coal A. The rest of experimental processes were the same as those of the aforementioned Experimental Example 1. Properties and quality in a hot state of the coal briquettes manufactured according to Experimental Example 3 are listed in the following Table 3.

As listed in Table 3, the coal ash content of the coal briquettes was slightly increased by adding calcined anthracite coal, but the fixed carbon content of the coal briquettes was also increased. The reason is that the coal ash content included in the added anthracite coal is high and thus the volatile matter of the coal briquettes is reduced in a calcinating process. When the amount of fixed carbon of the coal briquettes increased while the amount of volatile matter of the coal briquettes is reduced, probability that the coal briquettes are transformed to char in the melter-gasifier increased.

### Experimental Example 4

Coal briquettes were manufactured by using anthracite coal. The coal briquettes were manufactured by mixing 10wt% of anthracite coal calcined at 800 °C and 90wt% of coal A. The rest of experimental processes were the same as those of the aforementioned Experimental Example 1. Properties and quality in a hot state of the coal briquettes manufactured according to Experimental Example 3 are listed in the following Table 3.

As the usage amount of calcined anthracite coal was increased, the hot strength index of the coal briquettes was increased. The reason is that the anthracite coal is calcined at 800 °C to have a thermally stable characteristic, and as the amount of fixed carbon of the coal briquettes increased and the amount of volatile matter is relatively reduced, a discharging amount of the volatile matter is reduced at a high temperature.

### Experimental Example 5

Coal briquettes were manufactured by using anthracite coal. The coal briquettes were manufactured by using 15wt% of anthracite coal calcined at 800°C. The rest of experimental processes were the same as those of the aforementioned Experimental Example 1. The hot strength index of coal briquettes as 58.3% was further increased as compared with Experimental Example 3.

### Comparative Example 4

Coal briquettes were manufactured by using 90 wt% of coal A and 10 wt% of non-calcined anthracite coal. The rest of experimental processes were the same as those of the aforementioned Experimental Example 1. The anthracite coal were added to the coal briquettes in a non-calcined state, and as a result, the hot strength index of the coal briquettes deteriorated. The reason is that the anthracite coal is not calcined and is not thermally stable.

### Comparative Example 5

Coal briquettes were manufactured by using 85wt% of coal A and 15wt% of non-calcined anthracite coal. The rest of experimental processes were the same as those of the aforementioned Experimental Example 1. The anthracite coal were added to the coal briquettes in a non-calcined state, and as a result, the hot strength index of the coal briquettes further deteriorated.

**(Table 3)**

| Experimental Example | Raw material mixing ratio (%) | | | Technical analysis of coal briquettes (%) | | Hot strength index (+10 mm, %) |
|---|---|---|---|---|---|---|
| | Coal A | Calcined anthracite coal | Non-calcined anthracite coal | Coal ash | Fixed carbon | |
| Experimental Example 3 | 95 | 5 | | 12.0 | 56.9 | 37.7 |
| Experimental Example 4 | 90 | 10 | | 13.6 | 57.7 | 56.1 |
| Experimental Example 5 | 85 | 15 | | 13.7 | 59.1 | 58.3 |
| Comparative Example 4 | 90 | | 10 | 12.5 | 57.6 | 10.8 |
| Comparative Example 5 | 85 | | 15 | 13.4 | 58.1 | 9.6 |

### Calcined-brown coal adding experiment

In the aforementioned Experimental Example 3 to Experimental Example 5, coal briquettes were manufactured by using anthracite coal having the highest degree of carbonization and brown coal having the lowest degree of carbonization. Physical properties of brown coal are listed in the following Table 4. As listed in Table 4, brown coal includes a large amount of water and coal ash and has no coking force. Accordingly, since the coal briquettes manufactured by brown coal have a characteristic of a low room-temperature strength such as drop strength or compressive strength, the usage amount of binder needs to be increased.

**(Table 4)**

| Unique water (%) | Volatile matter (%) | Coal ash (%) | Fixed carbon (%) |
|---|---|---|---|
| 6.0 | 33.6 | 23.2 | 37.2 |

### Experimental Example 6

Coal briquettes were manufactured by using 95wt% of coal A and 5wt% of calcined brown coal. Here, the brown coal was calcined and manufactured at 800°C. The rest of manufacturing processes of the coal briquettes were the same as those in the aforementioned Experimental Example 3. Meanwhile, quality in a hot state of the coal briquettes with added calcined brown coal was evaluated. The quality of the coal briquettes adding brown coal is listed in the following Table 5. In this case, the hot strength index of the coal briquettes was 23.6% and much better than 12.3% which was the hot strength index of the coal briquettes manufactured according to Comparative Example 1.

### Experimental Example 7

Coal briquettes were manufactured by using 90wt% of coal A and 10wt% of calcined brown coal. Here, the brown coal was calcined and manufactured at 800°C. The rest of manufacturing processes of the coal briquettes were the same as those in the aforementioned Experimental Example 6. The hot strength index of the manufactured coal briquettes was 31.5% and was largely increased according to an increase of an adding amount of the brown coal as compared with Experimental Example 6.

### Experimental Example 8

Coal briquettes were manufactured by using 85wt% of coal A and 15wt% of calcined brown coal. Here, the brown coal was calcined and manufactured at 800°C. The manufacturing processes of the coal briquettes were the same as those in the aforementioned Experimental Example 6. The hot strength index of the manufactured coal briquettes was 43.8% and was largely increased according to an increase of an adding amount of the brown coal as compared with Experimental Example 7.

### Comparative Example 6

Coal briquettes were manufactured by using 90wt% of coal A and 10wt% of non-calcined brown coal. The manufacturing processes of the coal briquettes were the same as those in the aforementioned Experimental Example 6. The hot strength index of the manufactured coal briquettes was 8.3% and was smaller than the hot strength index of the coal briquettes of Comparative Example 1 without adding brown coal.

### Comparative Example 7

Coal briquettes were manufactured by using 85 wt% of coal A and 15wt% of non-calcined brown coal. The manufacturing processes of the coal briquettes were the same as those in the aforementioned Experimental Example 6. It could be seen that the hot strength index of the manufactured coal briquettes was 12.9% as listed in the following Table 5, and the hot strength index of the coal briquettes was slightly increased according to an increase of the usage amount of brown coal.

**(Table 5)**

| Experimental Example | Raw material mixing ratio (%) | | | Hot strength index (+10 mm, %) |
|---|---|---|---|---|
| | Coal A | Calcined brown coal | Non-calcined brown coal | |
| Experimental Example 6 | 95 | 5 | | 23.6 |
| Experimental Example 7 | 90 | 10 | | 31.5 |
| Experimental Example 8 | 85 | 15 | | 43.8 |
| Comparative Example 6 | 90 | | 10 | 8.3 |
| Comparative Example 7 | 85 | | 15 | 12.9 |

It could be seen that when the calcined brown coal is used for manufacturing the coal briquettes, due to thermal stability thereof, the quality in a hot state of the coal briquettes is largely improved. However, it can be seen that under the same adding condition, calcined petroleum coke and calcined anthracite coal have the same effect, and the calcined brown coal has a lower adding effect than the calcined petroleum coke and the calcined anthracite coal. It was assumed that this was related with the coal ash content of the carbon source. The quality in a hot state of the coal briquettes was largely improved by adding a small amount of the calcined carbon source to the coal briquettes.

As described above, it can be seen that when the calcined coal is added during manufacture of the coal briquettes, the quality in a hot state of the coal briquettes is improved. Therefore, when different kinds of coal other than petroleum coke, anthracite coal, and brown coal are calcined and added during manufacture of the coal briquettes, the quality in a hot state of the coal briquettes may be improved.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method for manufacturing coal briquettes charged into a dome part of the melter-gasifier to be rapidly heated in an apparatus for manufacturing molten iron comprising a melter-gasifier into which reduced irons are charged, and a reducing furnace connected to the melter-gasifier and providing the reduced iron, the method comprising:
providing fine coal;
calcinating a carbon source;
providing a mixture obtained by mixing the fine coal and the calcined carbon source; and
providing coal briquettes by molding the mixture,
wherein in the providing of the mixture, the amount of carbon source is more than 0wt% and 50wt% or less of the mixture.

2. The method of claim 1, wherein in the calcinating of the carbon source, the carbon source is one or more materials selected from a group consisting of petroleum coke, anthracite coal, and brown coal.

3. The method of claim 1, wherein, in the calcinating of the carbon source, the carbon source is one or more materials selected from a group consisting of sub-bituminous coal, bituminous coal, and semi-anthracite coal.

4. The method of claim 1, wherein in the providing of the mixture, the amount of carbon source is 5wt% to 30wt%.

5. The method of claim 1 further comprising selecting a grain size of the carbon source, wherein in the providing of the mixture, the grain size of the carbon source is larger than 0 and is 3mm or less.

6. The method of claim 1, wherein in the calcinating of the carbon source, a calcinating temperature of the carbon source is 700°C to 1100°C.

7. The method of claim 6, wherein the calcinating temperature of the carbon source is 800 °C to 1000 °C .

8. The method of claim 1, wherein, in the calcinating of the carbon source, when the carbon source is petroleum coke, the amount of petroleum coke in the mixture is 10wt% to 50wt%.

9. The method of claim 1, wherein in the calcinating of the carbon source, when the carbon source is anthracite coal, the amount of anthracite coal in the mixture is 5wt% to 30wt%.

10. The method of claim 1, wherein in the calcinating of the carbon source, when the carbon source is brown coal, the amount of brown coal in the mixture is 5wt% to 30wt%.
